# EUROPÄISCHE PATENTSCHRIFT

(11) **EP 1 227 012 B1**
(45) Veröffentlichungstag und Bekanntmachung des Hinweises auf die Patenterteilung: **20.07.2005**
(21) Anmeldenummer: 01127812.4
(22) Anmeldetag: 22.11.2001
(51) Int. Cl.: B60R 21/13

(54) **Überrollschutzsystem für Kraftfahrzeuge**
Rollbar protection system for motor vehicles
Système d'arceau de sécurité pour véhicules automobiles

(30) Priorität: 25.01.2001 DE 10103249
(43) Veröffentlichungstag der Anmeldung: 31.07.2002
(73) Patentinhaber: ISE Innomotive Systems Europe GmbH, 51702 Bergneustadt (DE)
(72) Erfinder: Berges, Stephan, 51647 Gummersbach (DE); Nowack, Reinhard, 57489 Drolshagen (DE); Janisch, Mirko, 53797 Lohmar (DE); Flick, Andrea, 53844 Troisdorf (DE)
(74) Vertreter: Fuchs Mehler Weiss & Fritzsche

(56) Entgegenhaltungen:
- DE-A- 4 302 152
- DE-A- 4 342 400
- DE-A- 19 750 457
- DE-C- 19 910 424
- DE-C- 19 925 520

## Beschreibung

Die Erfindung bezieht sich auf ein Überrollschutzsystem für Kraftfahrzeuge, gemäß dem Oberbegriff der Anspruchs 1, wie es aus der DE-A-4342400 bekannt gewerden ist.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise gemäß der DE 43 42 400 A1 einen in einem fahrzeugfesten Kassetten-Gehäuse geführten Überrollkörper auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Das Gehäuse besitzt zwei U-förmige Seitenwände und ein Bodenblech sowie frontseitige Deckbleche. Im oberen Abschnitt des Kassettengehäuses ist ein Führungsblock für den Überrollkörper fest angebracht. Dabei ist jedem Fahrzeugsitz eine derartige Kassette zugeordnet. Das Überrollschutzsystem besitzt weiterhin typischerweise einen U-förmigen Überrollbügel, bestehend aus einem gekrümmten Abschnitt und zwei parallelen, in den Führungsblock geführte Schenkelrohre, die jeweils eine geschlossene Mantelfläche besitzen, und deren offene Enden über eine in den Seitenwänden der Kassette geführten Traverse miteinander verbunden sind.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Element mit dem Überrollbügel und das andere fahrzeugfest verbunden ist.

Die Entriegelungskomponente zum Reversieren des ausgefahrenen Überrollkörpers besteht typischerweise aus einem manuell betätigbaren Entriegelungshebel, durch den die beiden miteinander verriegelten Verriegelungskomponenten aus dem verriegelnden Wirkeingriff bringbar sind.

Bei den bekannten Überrollschutzsystemen sind Haltevorrichtung und Verriegelungseinrichtung mit der Entriegelungskomponente getrennte, d.h. entkoppelte Baugruppen mit jeweils funktionsspezifischen Bauteilen. Dadurch sind nicht nur zahlreiche Bauteile notwendig, d.h. es ist ein relativ hoher Recourceneinsatz bei Fertigung und Montage notwendig, sondern diese zahlreichen funktionsspezifischen Bauteile erhöhen das Gewicht des Systems und den notwendigen Bauraum im Kassettengehäuse, der ohnehin nur im begrenzten Umfang in den Fahrzeugen zur Verfügung steht.

Außerdem ermöglicht die bekannte Anordnung der Verriegelungskomponenten mit typischerweise einer fahrzeugfesten Verriegelungsklinke im feststehenden Führungsblock und typischerweise einem an der Traverse angebrachten, d.h. mit dem Überrollbügel mitbewegten Rastdorn keine günstige Konstruktion, bei der bereits bei niedrigen Ausfahrhöhen die Verriegelung in Kraft tritt. Denn dazu müßte der Rastdorn sehr lang sein, was wiederum dazu führen würde, daß er im vollständig ausgefahrenen Zustand sehr weit aus dem Führungsblock herausragen würde. Dieses Überstehen würde jedoch eine zusätzliche Verletzungsgefahr für den Fahrzeuginsassen bedeuten und zudem die Führung des Sicherheitsgurtes nachteilig beeinflussen.

Der Erfindung liegt die Aufgabe zugrunde, das eingangs bezeichnete Überrollschutzsystem so auszubilden, daß hinsichtlich der Haltevorrichtung und der Verriegelungseinrichtung weniger Bauelemente notwendig sind, bezüglich der Entriegelungskomponente eine einfachere Reversierung möglich ist und ein Verriegeln bereits bei geringen Aufstellhöhen des Überrollkörpers ohne störende Überstände erreichbar ist.

Die Lösung dieser Aufgabe gelingt bei einem Überrollschutzsystem für Kraftfahrzeuge gemäß den Anspruch 1.

Durch die drei auf einer Achse befindlichen, in gegenseitiger Wirkverbindung stehenden Komponenten läßt sich die Zahl der Bauteile, d.h. der Recourceneinsatz bei Fertigung und Montage und auch das Gewicht des Systems vermindern. Ferner ist durch die kompakte Anordnung der Bauteile im Überrollkörper nur ein relativ geringer Bauraum notwendig. Durch die nach unten gerichtete Anordnung des langgestreckten Verriegelungskörpers an der feststehenden Führungseinheit ist ein Verriegeln schon bei kleinen Ausfahrlängen ohne obere Überstände an der Führungseinheit möglich.

Die Maßnahmen nach der Erfindung können bei verschieden ausgestalteten Überrollschutzsystemen Anwendung finden. Eine bevorzugte Anwendung finden sie bei einem Überrollschutzsystem, mit einem U-förmigen Überrollbügel und einem kassettenartigen Gehäuse, bestehend aus Seitenprofilteilen und einem Bodenteil, das im oberen Abschnitt einen an den Seitenprofilteilen befestigten Führungsblock mit Bohrungen für die Führung der Schenkel des Überrollbügels, deren freie Enden über eine Traverse miteinander verbunden sind, aufweist, in dem an der unteren Fläche des Führungsblockes der nach unten gerichtete, langgestreckte Verriegelungskörper, und der Lagerbolzen für die drehbare Anlenkung der Verriegelungsklinke, der Halteklinke und des Entriegelungshebels an der Traverse angebracht ist, und daß auf dem Bodenteil der Haltebügel zusammen mit einem sensorgesteuerten Auslösesystem fest angebracht sind.

Bei einer derartigen Ausbildung des Überrollschutzsystems kann mit konstruktivem Vorteil die vorhandene Traverse als Bauraum für die Klinken und den Entriegelungshebel verwendet werden.

Eine besonders wirksame Verriegelung des ausgefahrenen Überrollkörpers läßt sich erzielen, wenn der langgestreckte Verriegelungskörper als Rastdorn mit einer Vielzahl von umlaufenden, Zahnsegmente bildenden, übereinanderliegenden Hinterschneidungen ausgebildet ist, und die Verriegelungsklinke mindestens drei Zahnsegmente aufweist.

Für ein wirksames lösbares Halten des gespannten Überrollkörpers ist gemäß einer Ausgestaltung der Erfindung das Überrollschutzsystem so ausgebildet, daß die Halteklinke am freien Ende einen hakenförmigen Fortsatz für einen lösbaren Wirkeingriff mit dem Haltebügel aufweist.

Um das Verringern der notwendigen Bauteile zu fördern, ist zweckmäßig das Überrollschutzsystem so ausgebildet, daß die Verriegelungsklinke und die Halteklinke einstückig als ein federvorgespanntes Bauteil ausgebildet sind, das eine Abstellung für den Wirkeingriff mit dem Entriegelungshebel besitzt.

Alternativ dazu kann jedoch auch das Überrollschutzsystem so ausgebildet sein, daß die Verriegelungsklinke und die Halteklinke als zwei getrennte Bauteile ausgebildet sind, die über eine Abstellung miteinander in Wirkverbindung stehen, und denen jeweils eine Druckfeder zur Vorspannung zugeordnet ist, wobei zusätzlich an der Halteklinke eine seitliche Abstellung für einen Wirkeingriff mit dem Entriegelungshebel vorgesehen ist.

Bei einer derartigen Ausgestaltung wird durch die eine Feder, die ohnehin für die Vorspannung der Halteklinke notwendig ist, somit auch die Funktion der Verriegelung beeinflußt, einmal wird die Eingriffskraft der Verklinkung verstärkt und zum anderen wird durch die Wirkung von zwei Federn die Sicherheit verdoppelt.

Da die Halteklinke mit relativ hoher Kraft an dem Haltebügel anliegt, ist das sensorgesteuerte Auslösesystem zweckmäßig als eine stiftausstoßende, pyrotechnische Patrone ausgebildet, die für eine wirksame Auslösung sorgt.

Um ein Reversieren des Überrollkörpers sicherzustellen, sieht eine weitere Ausgestaltung der Erfindung vor, daß der Entriegelungshebel so ausgebildet ist, daß nach einem bestimmten Verschwenkungswinkel sein unteres Ende in Wirkeingriff mit der seitlichen Abstellung an der Verriegelungsklinke gelangt.

Auf diese Weise ist durch ein einfaches Verschwenken des zweiarmigen Entriegelungshebels es auf einfache Weise möglich, die beiden Verriegelungskörper außer Wirkeingriff zu bringen.

Um ein Reversieren des Überrollkörpers mit beiden Händen zu ermöglichen, ist das Überrollschutzsystem zweckmäßig so ausgebildet, daß am oberen Ende des Entriegelungshebels ein seitlicher Ansatz und am Führungsblock eine angeformte komplementäre Kante für eine Selbsthaltung des verschwenkten Entriegelungshebels über einen vorgegebenen Verfahrweg des Überrollbügels bzw. der zugehörigen Traverse ausgebildet sind.

Anhand eines in den Zeichnungen dargestellten Ausführungsbeispieles wird die Erfindung näher erläutert.

Es zeigen:
- Figur 1: in einer schematisierten Längsschnitt-Darstellung eine spezielle Kassettenkonstruktion eines Überrollschutzsystems mit der erfindungsgemäßen Bauweise und Anordnung der Haltevorrichtung und der Verriegelungseinrichtung, einschließlich der Entriegelungskomponente,
- Figur 2: in einer schematischen Längsschnitt-Darstellung durch den mittigen Teil der Traverse des Überrollschutzsystems nach Figur 1 einen Ausschnitt mit der Haltevorrichtung und der Verriegelungseinrichtung im Ausgangszustand des Systems,
- Figur 3: eine Darstellung entsprechend Figur 2 im ausgelösten Zustand des Systems,
- Figur 4: eine Darstellung entsprechend Figur 3, die den Beginn der Aufstellbewegung des Überrollkörpers zeigt,
- Figur 5: in einer schematischen Längsschnitt-Darstellung einen größeren Ausschnitt aus Figur 1, jedoch in der oberen, ausgefahrenen Stellung des Überrollschutzsystems, unter Hervorhebung der Entriegelungskomponente in Form eines Entriegelungshebels,
- Figur 5 A: eine Draufsicht auf das Kassettensystem im Zustand nach Fig. 5,
- Figur 6: in einer Darstellung entsprechend Figur 5 den Zustand des Systems bei Beginn einer Reversierbewegung,
- Figur 6 A: eine Draufsicht auf das System im Zustand nach Fig. 6 unter Darstellung der Zwangsführung des Entriegelungshebels,
- Figur 7: in einer Darstellung entsprechend den Figuren 5 und 6 den Zustand des Systems unmittelbar vor dem Verklinken der Haltevorrichtung und der Verriegelungseinrichtung in der eingefahrenen Position des Überrollkörpers, und
- Figur 7 A: einen Schnitt durch das Kassettensystem im Zustand nach Fig. 7 entlang der Schnittlinie 7 A - 7 A.

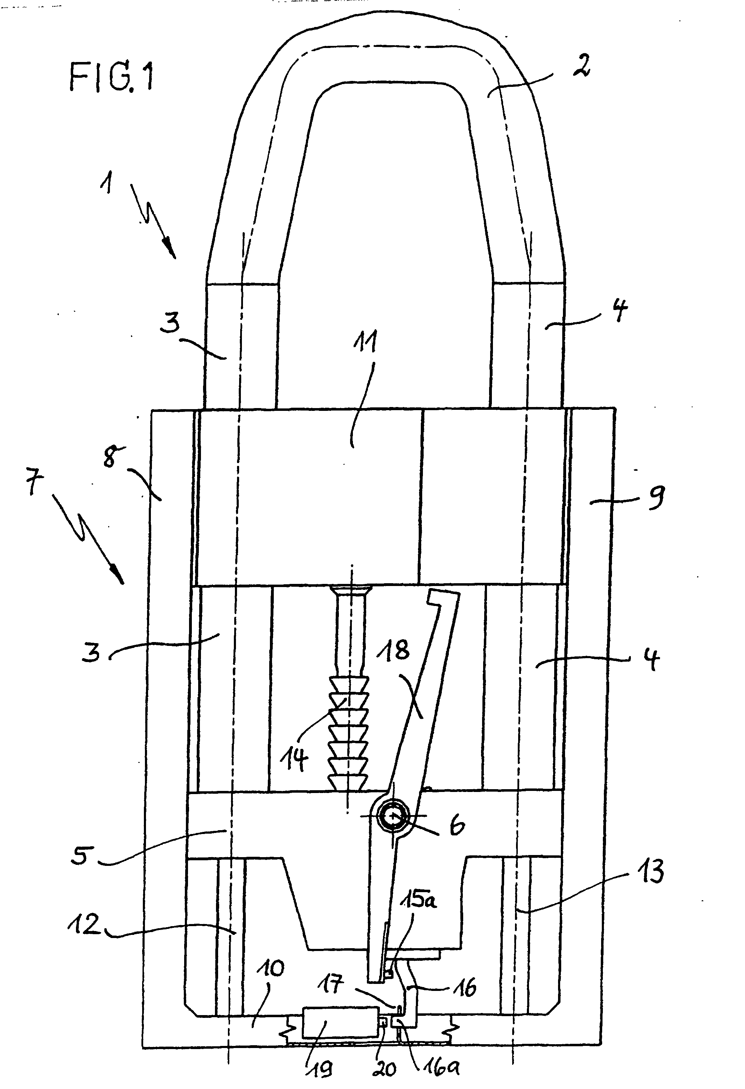

Die Figur 1 zeigt in einer schematisierten Längsschnitt-Darstellung eine Kassettenkonstruktion eines Überrollschutzsystems für Kraftfahrzeuge, das jeweils einem Fahrzeugsitz zugeordnet ist, bei dem die erfindungsgemäßen Maßnahmen vorgesehen sind. Es versteht sich, daß die erfindungsgemäßen Maßnahmen auch bei anderen Überrollschutzsystemen Anwendung finden können.

In Figur 1 ist dabei der eingefahrene Zustand des Überrollschutzsystems, d.h. die betriebliche Ruhelage, dargestellt. In der folgenden Beschreibung der Figur 1 werden dabei der besseren Übersicht halber nur die wesentlichen Komponenten des Überrollschutzsystems angesprochen.

Dieses Überrollschutzsystem weist zunächst einen U-förmigen Überrollbügel 1 auf, welcher aus drei Rohren 2, 3, 4 zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelrohre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen zur Aufnahme der Schenkelrohre 3, 4 aufweist, in denen sie befestigt sind.

Der Überrollbügel 1 ist mit seinen beiden Schenkelrohren 3, 4, die eine geschlossene Mantelfläche aufweisen und der Verbindungs-Traverse 5 in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen Führungsblock 11 miteinander verbunden, z.B. durch Nieten, Schrauben, Verschweißen oder dergleichen.

Im Bodenblech 10 sind zwei Federführungsbolzen 12, 13 verankert, auf denen (nicht dargestellte) vorspannbare Druckfedern zum Ausfahren des Überrollbügels 1 im Gefahrenfall, bzw. bei Handauslösung, aufgeschoben sind und die die Schenkelrohre führen.

Es ist auch denkbar, die Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt zwei Führungsbohrungen, die die Mantelfläche der Schenkelrohre 3, 4 seitlich abstützen und eine sehr weit tolerierte Führung für die sich längs der Führungsbohrungen bewegenden Schenkelrohre 3, 4 bieten. Am oberen, dem gekrümmten Rohr 2 zugewandten Ende der Führungsbohrungen ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen ausgeglichen wird.

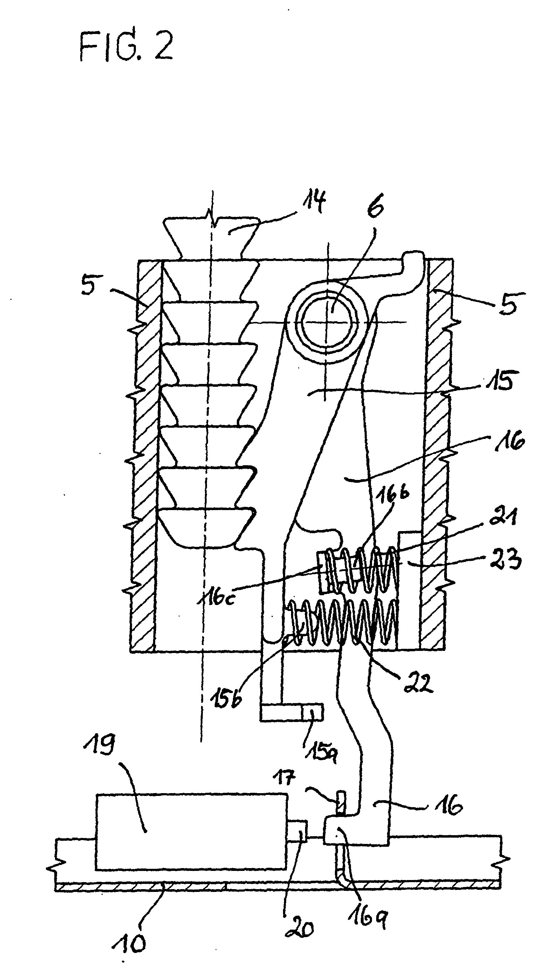

Die beiden Komponenten der Verriegelungseinrichtung sind einmal ein an sich bekannter Rastdorn 14, der an der Unterseite des fahrzeugfesten Führungsblockes 11 nach unten gerichtet, sozusagen kopfüber, fest angebracht ist, und zum anderen eine um die durch einen Lagerbolzen 6 vorgegebene Achse drehbar in der Traverse 5 angelenkte Verriegelungsklinke 15, die in den Figuren 2 bis 5 näher dargestellt ist. Diese Verriegelungseinrichtung verhindert ein ungewolltes Wiedereinfahren des Überrollbügels.

Die Haltevorrichtung besteht aus einer ebenfalls auf dem Lagerbolzen 6 drehbar aufgenommenen, federvorgespannten Halteklinke 16 und einem im Gehäuseboden 10 vorgesehenen Haltebügel 17, wie insbesondere auch aus den Figuren 2 bis 4 hervorgeht. Im Ruhestand (Figuren 1 und 2) greift die Halteklinke 16 mit einem hakenförmigen Fortsatz 16a in den Haltebügel 17 ein und hält das Überrollsystem gegen die Kraft der vorgespannten Antriebsfedern gespannt. Um die Halteklinke außer Wirkeingriff mit dem Haltebügel zu bringen, d.h. um den Überrollbügel freizugeben, ist ein auf dem Kassettenboden 10 angebrachtes, sensorgesteuertes pyrotechnisches Auslösesystem 19 mit einem ausstoßbaren Betätigungsstift 20 vorgesehen, der im Betätigungsfall den hakenförmigen Fortsatz 16 a aus der Öffnung des Haltebügels drückt.

Wie die Figur 2 erkennen läßt, können dabei die Verriegelungsklinke 15 und die Halteklinke 16 als Einheit, d.h. als ein Bauteil ausgeführt werden.

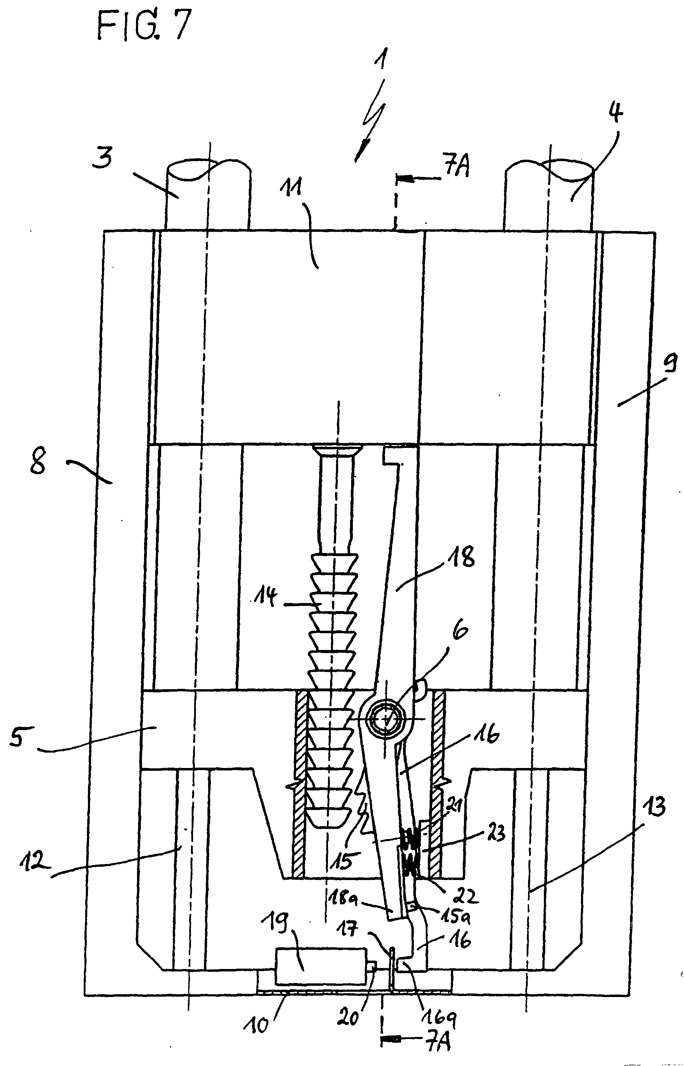

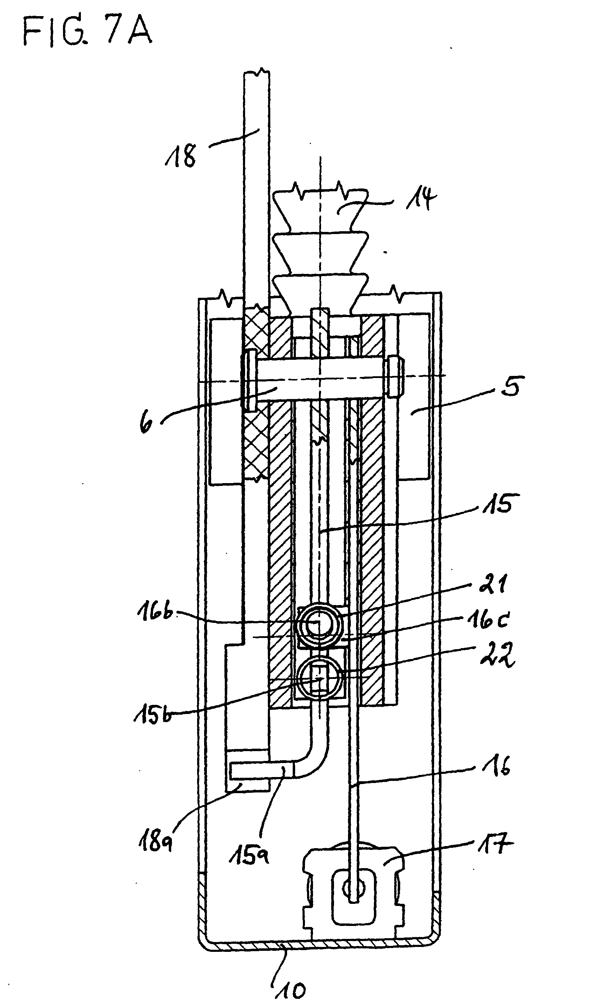

Auf dem Lagerbolzen 6 ist ferner ein Entriegelungshebel 18 zum Durchführen des Reversiervorganges verschwenkbar gelagert. Dieser Entriegelungshebel 18 hat Steuerfunktionen und wirkt auf die Verriegelungsklinke 15 über eine an dieser Klinke angebrachte seitliche Abstellung 15a mitnehmend ein, wie auch die Schnittansicht nach Fig. 7 A zeigt. Die Verriegelungsklinke wirkt ihrerseits auf die Halteklinke 16 über eine an ihr angebrachte seitliche, aus der Zeichenebene herausragenden Abstellung 16 c ein.

Auf dem Lagerbolzen 6 sind daher drei Komponenten um eine gemeinsame Achse drehbar in der Traverse 5 gelagert, die teilweise ein Bauteil bilden. Dadurch läßt sich die Zahl der Bauteile, d.h. der Recourceneinsatz bei Fertigung und Montage, und auch das Gewicht des Systems vermindern. Ferner ist durch die kompakte Anordnung der Bauteile in der Traverse 5 nur ein relativ geringer Bauraum notwendig. Durch die nach unten gerichtete Anordnung des Rastdornes 14 am feststehenden Führungsblock 11 ist ein Verriegeln schon bei kleinen Ausfahrlängen ohne obere Überstände am Führungsblock 11 möglich.

Die Figuren 2 bis 4 zeigen in einer schematischen Längsschnittdarstellung durch den mittigen Teil der Traverse 5 des Überrollschutzsystems nach Figur 1 den näheren Aufbau der Haltevorrichtung mit der Halteklinke 16, 16a und dem Haltebügel 17 am Kassettenboden 10 sowie der Verriegelungseinrichtung mit dem Rastdorn 14 und der Verriegelungsklinke 15 in verschiedenen Systemzuständen.

Die Verriegelungsklinke 15 wird mittels zweier Druckfedern 21, 22 gegen den Rastdorn 14 gedrückt. Diese Druckfedern sind in einem Einsatz 23 in einer Ausnehmung der Traverse 5 aufgenommen. Die eine Feder 22 wirkt, aufgenommen in einem Fortsatz 15 b direkt auf die Verriegelungsklinke 15, während die andere Feder 21 auf die Halteklinke 16, an der sich eine Federaufnahme 16 b auf der um 90° zur Hebelfunktion abgewinkelten Abstellung 16c befindet, vorspannend wirkt, (siehe Fig. 7 A), und über diese Abstellung 16 c indirekt auf die Verriegelungsklinke 15 wirkt. Denn die Halteklinke 16 kommt mit ihrer seitlichen Abstellung 16 c auf der Verriegelungsklinke 15 zur Anlage und erhöht damit auch deren Verriegelungskraft bzw. wird umgekehrt beim Verschwenken der Verriegelungsklinke 15 mitgenommen.

Die Figur 2 zeigt das System im unteren, eingefahrenen Zustand, in dem die Halteklinke 16 im Wirkeingriff mit dem Haltebügel 17 steht. Auch die beiden Verriegelungskomponenten 14, 15 sind bereits im verriegelnden Wirkeingriff, d.h. die Verriegelungseinrichtung ist bereits in der untersten Position des Überrollbügels praktisch aktiviert.

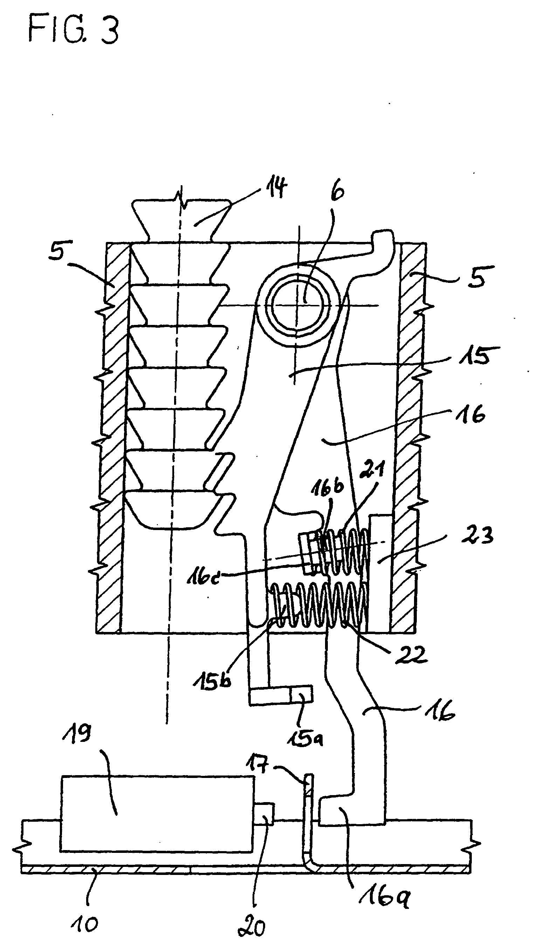

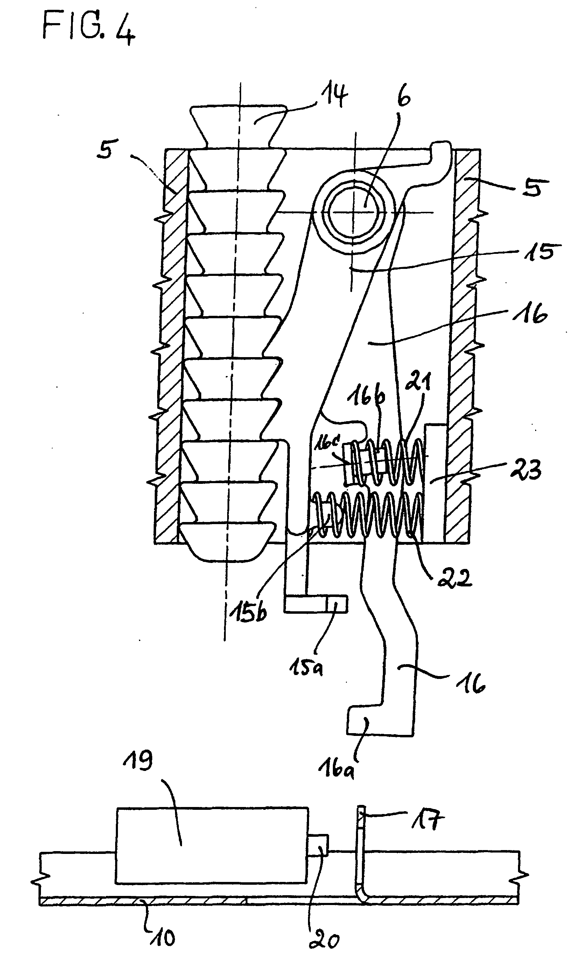

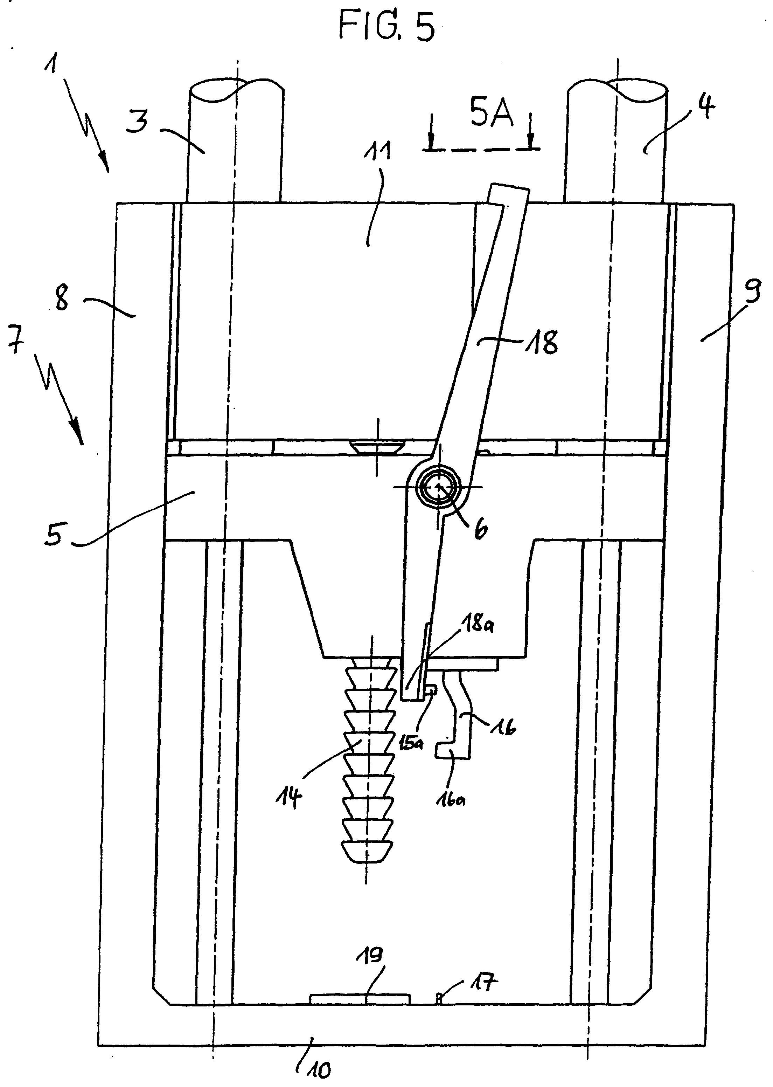

Wird das Auslösesystem 15 gezündet, stößt der Stift 20 die Nase 16a aus dem fahrzeugfesten Verriegelungsbügel 17 und löst somit das Halten der Traverse 5 und damit des Überrollbügels. Dieser Zustand ist in Figur 3 dargestellt. Der freigegebene Überrollbügel fährt dadurch, angetrieben von den Druckfedern, in seine obere Stützlage. Während dieser Aufstellbewegung, deren Beginn in Figur 4 durch den nach oben gerichteten Pfeil und deren Endzustand in Figur 5 dargestellt ist, ratscht die Verriegelungsklinke 15 über die Verzahnung des Rastdornes 14, dessen Zahnflanken jeweils die Verriegelungsklinke 15 nach rechts gegen die Kraft der Druckfedern 21, 22 wegdrücken.

Eine Einfahrbewegung des Überrollbügels und damit der Traverse 5 mit der Verriegelungsklinke 15 ist jedoch durch den Zahnwirkeingriff verriegelt.

Nach dem Verlassen der Halteposition schwenkt dabei die federbelastete Halteklinke 16 aufgrund der vorgespannten Druckfeder 21 soweit in Richtung Verriegelungsklinke 15, daß sie auf diesem zur Anlage kommt. Sie verstärkt damit durch den Einsatz der zweiten Druckfeder 21 den Verriegelungsdruck auf den Rastdorn 14.

Durch die zweite Feder 21, die ohnehin für die Vorspannung der Halteklinke 14 notwendig ist, wird somit auch die Funktion der Verriegelung beeinflußt. Einmal wird die Eingriffskraft der Verklinkung gestärkt und zum anderen wird durch die Wirkung von zwei Federn die Sicherheit verdoppelt.

Um den ausgefahrenen Überrollbügel 1 wieder manuell einfahren zu können, d.h. das System reversieren zu können, muß die Verriegelungsklinke 15 während der Abwärtsbewegung außer Eingriff sein und die Halteklinke 16 so weit gegen den Uhrzeigersinn zurückschwenken, daß sie rechts neben dem Haltebügel 17 steht. Diese Funktionen werden durch den Entriegelungshebel 18 bewirkt, der auf demselben Lagerbolzen 6 wie die beiden Klinken 15, 16 drehbar angebracht ist.

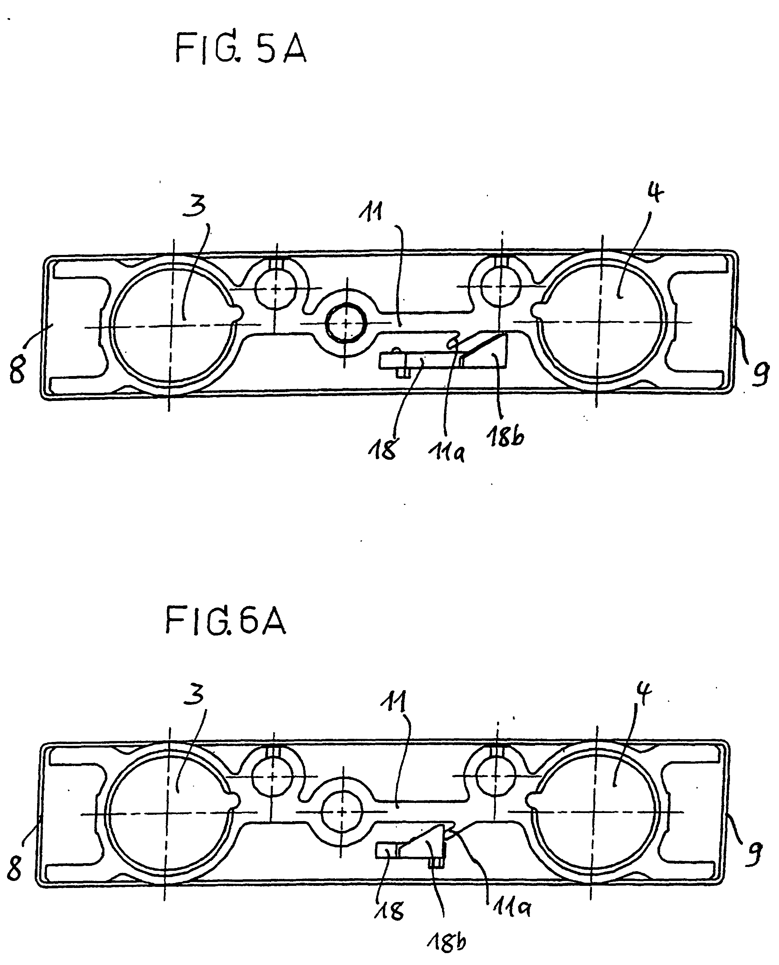

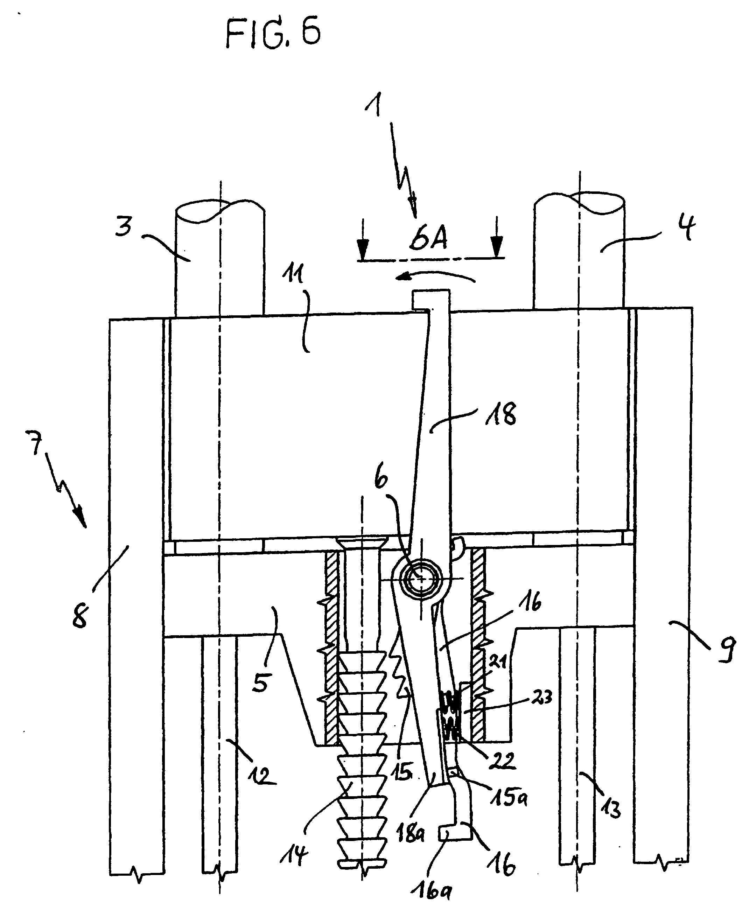

Zur Reversierung des Systems wird der Entriegelungshebel 18 gemäß Figur 6 in Pfeilrichtung, d.h. gegen den Uhrzeigersinn verschwenkt. Dabei greift das untere Hebelarmende 18a mittels der abgestellten Nase 15a an der Verriegelungsklinke an und drückt diese aus der Verzahnung mit dem Rastdorn 14 heraus.

Damit ist die Verriegelung aufgehoben und der Überrollbügel 1 frei zum Einschieben in den unteren Teil der Kassette 7. Gleichzeitig wird die Halteklinke 16 unter Spannen der Feder 21 über die Abstellung 16b gegen den Uhrzeigersinn verschwenkt.

Dieser Zustand ist in der Figur 6 dargestellt.

Nach ca. 5 mm Einschubweg des Überrollbügels wird der Entriegelungshebel 18, der, wie auch die Draufsicht auf die Kassette im Zustand der Fig. 5 gemäß Fig. 5 A zeigt, am oberen Ende einen seitlichen Ansatz 18 b hat, hinter einer am Profil des Führungsblockes 11 angeformten Kante 11 a geführt, die verhindert, daß der Entriegelungshebel 18 nach dem Loslassen wieder in seine Ruhestellung verschwenkt. Dieser Zustand ist in Fig. 6 A dargestellt. Mit dieser Zwangsführung wird erreicht, daß beim Einschieben des Überrollbügels 1 der Entriegelungshebel 18 losgelassen werden kann und beide Hände den Überrollbügel 1 einschieben können.

Beim Erreichen der unteren Position gemäß Figur 7 wird der Überrollbügel ca. 6 mm tiefer als die Halteposition gedrückt. Dadurch wird der Entriegelungshebel 18 wieder frei, d.h. sein seitlicher Ansatz am oberen Ende verläßt seine Position hinter der Profilkante, schwenkt zurück in seine Ruheposition und gibt die Halteklinke 16 frei. Diese schwenkt federbelastet durch die Feder 21 gegen bzw. in den Haltebügel 17 und rastet dort ein.

Damit ist der Überrollbügel gespannt für eine weitere Auslösung, z.B. bei einem eventuellen drohenden Überschlag.

Auch die Verriegelungsklinke 15 rastet unter der Wirkung der Druckfeder 22 wieder in Zahnung des Rastdornes 14 ein, wodurch der Überrollbügel 1 wieder entsprechend dem Zustand in Figur 2 verriegelt ist. Aufgrund der Bauweise und der Anordnung der Verriegelungselemente ergibt sich bereits mit Vorteil im gehaltenen Zustand des Überrollbügels, d.h. in der untersten Position, eine Verriegelung des Systems, wobei nach einem Ausfahrhub von 12 mm alle drei Zähne der Verriegelungsklinke im Eingriff sind, wodurch auf relativ einfache Weise einer entsprechenden Sicherheitsforderung aus der Autobranche Rechnung getragen werden kann.

Wird die Reversierung vor dem Einrasten der Halteklinke 16 in dem Haltebügel 17 abgebrochen, z.B. weil die Kräfte des Fahrers/der Fahrerin nicht ausreichen, um die Antriebsfedern zu spannen, fährt der Überrollbügel wieder in seine oberste Position. Dabei verläßt der seitliche Ansatz 18 b des Entriegelungshebels 18 die angeformte Kante 11 a am Führungsblock 11, schwenkt in seine Ruhelage und ermöglicht dadurch die Verriegelung des Systems. Der Wagen fährt dann zwar mit aufgestelltem Überrollbügel weiter, jedoch ohne Sicherheitsverlust, da er ja verriegelt ist.

Ist der Überrollbügel nur teilweise ausgefahren, z.B. nur bis zur Dachunterkante, kann die Entriegelung (zum zwecke des Reversierens) mittels des Entriegelungshebels 18 wegen unzureichendem Zugang nicht erfolgen. Bei einer solchen Situation kann vom Kofferraum aus, z.B. mittels eines Schraubendrehers, der Entriegelungshebel 18 in seine entriegelnde Position verschwenkt werden. Dies wird durch die Schrägen an dem Ansatz 18 b und der Kannte 11 a (siehe Figuren 5 A und 6 A) ermöglicht.

## Patentansprüche

1. Überrollschutzsystem für Kraftfahrzeuge mit
- einem Überrollkörper (1-5), der in einer fahrzeugfesten Führungseinheit geführt aufgenommen ist, und der im Normalzustand gegen die Kraft von mindestens einer vorgespannten Antiebs-Druckfeder durch eine Haltevorrichtung (16, 17) in einer unteren, eingefahrenen Ruhelage haltbar ist, und unter Lösen der Haltevorrichtung durch die Federkraft der Antriebs-Druckfeder in eine obere, schützende Stellung bringbar ist,
- einer Verriegelungseinrichtung (14, 15) für das Verriegeln des ausgefahrenen Überrollkörpers gegen ein ungewolltes Wiedereinfahren, bestehend aus zwei Verriegelungskomponenten in Form einer drehbar angelenkten Verriegelungsklinke (15) und eines in Verfahrrichtung langgestreckten Verriegelungskörpers (14), von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen, und
- einer Entriegelungskomponente (18) zum Reversieren des ausgefahrenen Überrollköpers,
**dadurch gekennzeichnet, daß** der langgestreckte Verriegelungskörper (14) an der Führungseinheit (11) nach unten gerichtet fest angebracht ist und die Verriegelungsklinke (15) auf einem Lagerbolzen (6) am Überrollkörper (1 - 5) federvorgespannt drehbar angelenkt ist, daß die Haltevorrichtung eine federvorgespannte Halteklinke (16), die drehbar auf dem Lagerbolzen (6) am Überrollkörper gehaltert ist, und einen fahrzeugfesten Haltebügel (17) für eine haltende Wirkverbindung mit der Halteklinke (16) aufweist, und daß die Entriegelungskomponente als zweiarmiger Entriegelungshebel (18) ausgebildet ist, der ebenfalls verschwenkbar auf dem Lagerbolzen (6) am Überrollkörper (1 - 5) gehaltert ist und über eine Abstellung (15a) an der Verriegelungsklinke (15) mit dieser in Wirkverbindung steht.

2. Überrollschutzsystem nach Anspruch 1, mit einem U-förmigen Überrollbügel (1) und einem kassettenartigen Gehäuse (7), bestehend aus Seitenprofilteilen (8, 9) und einem Bodenteil (10), das im oberen Abschnitt einen an den Seitenprofilteilen befestigten Führungsblock (11) mit Bohrungen für die Führung der Schenkel (3, 4) des Überrollbügels, deren freie Enden über eine Traverse (5) miteinander verbunden sind, aufweist, **dadurch gekennzeichnet, daß** an der unteren Fläche des Führungsblockes (11) der nach unten gerichtete, langgestreckte Verriegelungskörper (14), und der Lagerbolzen (6) für die drehbare Anlenkung der Verriegelungsklinke (15), der Halteklinke (16) und des Entriegelungshebels (18) an der Traverse (5) angebracht ist, und daß auf dem Bodenteil (10) der Haltebügel (17) zusammen mit einem sensorgesteuerten Auslösesystem (19, 20) fest angebracht sind.

3. Überrollschutzsystem nach Anspruch 1 oder 2, **dadurch gekennzeichnet, daß** der langgestreckte Verriegelungskörper als Rastdorn (14) mit einer Vielzahl von umlaufenden, Zahnsegmente bildenden, übereinanderliegenden Hinterschneidungen ausgebildet ist, und die Verriegelungsklinke (15) mindestens drei Zahnsegmente aufweist.

4. Überrollschutzsystem nach einem der Ansprüche 1 bis 3, **dadurch gekennzeichnet, daß** die Halteklinke (16) am freien Ende einen hakenförmigen Fortsatz (16a) für einen lösbaren Wirkeingriff mit dem Haltebügel (17) aufweist.

5. Überrollschutzsystem nach einem der Ansprüche 1 bis 4, **dadurch gekennzeichnet, daß** die Verriegelungsklinke (15) und die Halteklinke (16) einstückig als ein federvorgespanntes Bauteil ausgebildet sind, das eine Abstellung für den Wirkeingriff mit dem Entriegelungshebel (18) besitzt.

6. Überrollschutzsystem nach einem der Ansprüche 1 bis 4, **dadurch gekennzeichnet, daß** die Verriegelungsklinke (15) und die Halteklinke (16) als zwei getrennte Bauteile ausgebildet sind, die über eine seitliche Abstellung (16 c) an der Halteklinke miteinander in Wirkverbindung stehen, und denen jeweils eine Druckfeder (21, 22) zur Vorspannung zugeordnet ist, wobei zusätzlich an der Verriegelungsklinke (15) eine seitliche Abstellung (15 a) für einen Wirkeingriff mit dem Entriegelungshebel (18) vorgesehen ist.

7. Überrollschutzsystem nach einem der Ansprüche 2 bis 6, **dadurch gekennzeichnet, daß** das sensorgesteuerte Auslösesystem als eine stiftausstoßende pyrotechnische Patrone (19, 20) ausgebildet ist.

8. Überrollschutzsystem nach einem der Ansprüche 1 bis 7, **dadurch gekennzeichnet, daß** der Entriegelungshebel (18) so ausgebildet ist, daß nach einem bestimmten Verschwenkungswinkel sein unteres Ende (18a) in Wirkeingriff mit der seitlichen Abstellung (15a) an der Verriegelungsklinke (15) gelangt.

9. Überrollschutzsystem nach Anspruch 8, **dadurch gekennzeichnet, daß** am oberen Ende des Entriegelungshebels (18) ein seitlicher Ansatz und am Führungsblock (11) eine angeformte komplementäre Kante für eine Selbsthaltung des verschwenkten Entriegelungshebels (18) über einen vorgegebenen Verfahrweg des Überrollbügels bzw. der zugehörigen Traverse (5) ausgebildet sind.

## Claims

1. Rollbar protection system for motor vehicles, having
- a rollbar body (1-5) which is held in a manner such that it is guided in a guide unit secured on the vehicle and which, in the normal state, can be retained in a lower, retracted rest position by means of a retaining device (16, 17) counter to the force of at least one prestressed driving compression spring, and, by release of the retaining device, can be brought by the spring force of the driving compression spring into an upper protective position,
- a locking device (14, 15) for locking the extended rollbar body against inadvertently being retracted again, comprising two locking components in the form of a rotatably articulated locking pawl (15) and a locking body (14) stretched out in the direction of movement, of which one is attached in a manner secured on the vehicle and the other is connected to the rollbar body, and which have latching elements which are in locking operative engagement in the extended position of the rollbar body, and
- an unlocking component (18) for reversing the extended rollbar body,
**characterized in that** the stretched-out locking body (14) is attached in a downwardly directed and fixed manner to the guide unit (11) and the locking pawl (15) is articulated rotatably under spring prestress on a bearing bolt (6) on the rollbar body (1-5), **in that** the retaining device has a spring-prestressed retaining pawl (16) which is secured rotatably on the bearing bolt (6) on the rollbar body, and a retaining clip (17), which is secured on the vehicle, for a retaining operative connection to the retaining pawl (16), and **in that** the unlocking component is designed as a two-armed unlocking lever (18) which is likewise secured pivotably on the bearing bolt (6) on the rollbar body (1-5) and is operatively connected to the locking pawl (15) via an offset (15a) thereon.

2. Rollbar protection system according to Claim 1, having a U-shaped rollbar (1) and a cassette-like housing (7), comprising side profile parts (8, 9) and a bottom part (10) which has, in the upper section, a guide block (11) which is fastened to the side profile parts and has holes for guiding the limbs (3, 4) of the rollbar, the free ends of which limbs are connected to one another via a crosspiece (5), **characterized in that** the downwardly directed, stretched-out locking body (14) is attached to the lower surface of the guide block (11), and the bearing bolt (6) for the rotatable articulation of the locking pawl (15), the retaining pawl (16) and the unlocking lever (18) is attached to the crosspiece (5), and **in that** the retaining clip (17) together with a sensor-controlled release system (19, 20) are attached fixedly on the bottom part (10).

3. Rollbar protection system according to Claim 1 or 2, **characterized in that** the stretched-out locking body is designed as a latching pin (14) having a multiplicity of encircling undercuts which are situated one above another and form toothed segments, and the locking pawl (15) has at least three toothed segments.

4. Rollbar protection system according to one of Claims 1 to 3, **characterized in that** the retaining pawl (16) has, at the free end, a hook-shaped extension (16a) for a releasable operative engagement with the retaining clip (17).

5. Rollbar protection system according to one of Claims 1 to 4, **characterized in that** the locking pawl (15) and the retaining pawl (16) are designed as a single part in the form of a spring-prestressed component which has an offset for the operative engagement with the unlocking lever (18).

6. Rollbar protection system according to one of Claims 1 to 4, **characterized in that** the locking pawl (15) and the retaining pawl (16) are designed as two separate components which are operatively connected to each other via a lateral offset (16c) on the retaining pawl, and which are each assigned a compression spring (21, 22) for prestressing them, with a lateral offset (15a) for an operative engagement with the unlocking lever (18) additionally being provided on the locking pawl (15).

7. Rollbar protection system according to one of Claims 2 to 6, **characterized in that** the sensor-controlled release system is designed as a pin-ejecting, pyrotechnic cartridge (19, 20).

8. Rollbar protection system according to one of Claims 1 to 7, **characterized in that** the unlocking lever (18) is designed in such a manner that, after a certain pivoting angle, its lower end (18a) enters into operative engagement with the lateral offset (15a) on the locking pawl (15).

9. Rollbar protection system according to Claim 8, **characterized in that** a lateral projection is formed at the upper end of the unlocking lever (18) and an integrally formed, complementary edge is formed on the guide block (11) for automatic retention of the pivoted unlocking lever (18) over a predetermined path of movement of the rollbar or of the associated crosspiece (5).

## Revendications

1. Système d'arceau de sécurité pour véhicules automobiles avec :
- un corps d'arceau de sécurité (1-5) qui est logé de manière guidée dans une unité de guidage solidaire du véhicule et qui, en position normale, peut être maintenu dans une position de repos rentrée et inférieure par un mécanisme de maintien (16-17) suite à la force d'au moins un ressort de commande précontraint travaillant en compression et qui, moyennant déclenchement du mécanisme de maintien, peut être amené dans une position supérieure de protection grâce à la force de ressort du ressort de commande travaillant en compression;
- dispositif de verrouillage (14, 15) pour le verrouillage du corps d'arceau de sécurité sorti qui empêche une rentrée intempestive et qui est constitué de deux composants de verrouillage sous la forme d'un cliquet de verrouillage (15) articulé de manière à pouvoir pivoter et d'un corps de verrouillage (14) s'étendant longitudinalement dans le sens de déplacement, dont un est installé sur le véhicule de manière solidaire et l'autre est relié au corps de l'arceau de sécurité et qui possèdent des éléments d'encliquetage qui s'engagent par verrouillage en position sortie du corps de l'arceau de sécurité et
- un composant de déverrouillage (18) pour faire rentrer le corps d'arceau de sécurité sorti,
**caractérisé en ce que** le corps de verrouillage s'étendant longitudinalement (14) est installé de manière solidaire et dirigée vers le bas sur l'unité de guidage (11) et le cliquet de verrouillage (15) est articulé, de manière à pouvoir pivoter et par précontrainte d'un ressort, sur un axe d'appui (6) sur le corps d'arceau de sécurité (1-5), **en ce que** le mécanisme de maintien présente un cliquet de maintien (16) précontraint par ressort et qui est maintenu de manière à pouvoir pivoter sur l'axe d'appui (6) du corps d'arceau de sécurité ainsi qu'un étrier de maintien (17) solidaire du véhicule servant à une liaison active de maintien du cliquet de maintien (16) et **en ce que** le composant de déverrouillage est réalisé sous la forme d'un levier de déverrouillage (18) à deux bras, lequel est supporté, également de manière à pouvoir pivoter, sur l'axe d'appui (6) du corps d'arceau de sécurité (1-5) et se trouve, via un arrêt (15a) sur le cliquet de verrouillage (15), en liaison active avec celui-ci.

2. Système d'arceau de sécurité selon la revendication 1, avec un arceau de sécurité (1) en forme de U et un boîtier du genre cassette (7), se composant d'éléments profilés latéraux (8, 9) et d'un élément de fond (10), qui, dans sa section supérieure, présente un bloc de guidage (11) fixé aux éléments profilés latéraux et pourvu de perçages servant à guider les branches (3, 4) de l'arceau de sécurité, dont les extrémités libres sont reliées entre elles par une traverse (5), **caractérisé en ce que**, sur la face inférieure du bloc de guidage (11), on a installé sur la traverse (5) le corps de verrouillage (14) s'étendant longitudinalement et dirigé vers le bas et l'axe d'appui (6) pour l'articulation pivotante du cliquet de verrouillage (15), le cliquet de maintien (16) et le levier de déverrouillage (18) et **en ce que** l'étrier de maintien (17) est installé sur l'élément de fond (10) de manière solidaire avec le système de déclenchement (19, 20) piloté par des capteurs.

3. Système d'arceau de sécurité selon la revendication 1 ou 2, **caractérisé en ce que** le corps de verrouillage s'étendant longitudinalement est réalisé sous forme de mandrin à crans d'arrêt (14) avec un grand nombre de contre-dépouilles successives formant des segments dentés sur tout le périmètre et **en ce que** le cliquet de verrouillage (15) présente au moins trois segments dentés.

4. Système d'arceau de sécurité selon l'une quelconque des revendications 1 à 3, **caractérisé en ce que** le cliquet de maintien (16) présente, sur son extrémité libre, un prolongement (16a) servant à un engagement, pouvant être déclenché, dans l'étrier de maintien (17).

5. Système d'arceau de sécurité selon l'une quelconque des revendications 1 à 4, **caractérisé en ce que** le cliquet de verrouillage (15) et le cliquet de maintien (16) sont réalisés en une pièce sous la forme d'un composant précontraint par ressort qui dispose d'un arrêt pour l'engagement avec le levier de déverrouillage (18).

6. Système d'arceau de sécurité selon l'une quelconque des revendications 1 à 4, **caractérisé en ce que** le cliquet de verrouillage (15) et le cliquet de maintien (16) sont réalisés sous la forme de deux pièces séparées qui sont en liaison active l'une avec l'autre via un arrêt latéral (16c) sur le cliquet de maintien et à chacune desquelles est associé un ressort de compression (21, 22) servant à la précontrainte, un arrêt latéral (15a) étant en plus prévu sur le cliquet de verrouillage (15) pour une liaison active avec le levier de déverrouillage (18).

7. Système d'arceau de sécurité selon l'une quelconque des revendications 2 à 6, **caractérisé en ce que** le système de déclenchement piloté par capteurs est réalisé sous la forme d'une cartouche pyrotechnique (19, 20) à tige sortante.

8. Système d'arceau de sécurité selon l'une quelconque des revendications 1 à 7, **caractérisé en ce que** le levier de déverrouillage (18) est réalisé de manière telle qu'après un certain angle de pivotement, son extrémité inférieure (18a) entre en liaison active avec l'arrêt latéral (15a) du cliquet de verrouillage (15).

9. Système d'arceau de sécurité selon la revendication 8, **caractérisé en ce qu'**un talon latéral sur l'extrémité supérieure du levier de déverrouillage (18) et un bord complémentaire modelé sur le bloc de guidage (11) soient réalisés pour un maintien automatique du levier de déverrouillage (18) pivoté sur une course de déplacement prédéterminée de l'arceau de sécurité ou selon le cas de la traverse (5) associée.
